# FASCICULE DE BREVET EUROPEEN

(11) **EP 1 334 269 B1**
(45) Date de publication et mention de la délivrance du brevet: **04.01.2006**
(21) Numéro de dépôt: 01996682.9
(22) Date de dépôt: 09.11.2001
(51) Int. Cl.: F02M 31/04, F02D 13/02

(54) **PROCEDE DE REGULATION DE LA TEMPERATURE DE LA MASSE D'AIR ADMISE DANS UN CYLINDRE D'UN MOTEUR A COMBUSTION INTERNE ET MOTEUR METTANT EN OEUVRE CE PROCEDE**
VERFAHREN UND VORRICHTUNG ZUR STEUERUNG DER TEMPERATUR EINER LUFTMASSE IN EINEM VERBRENNUNGSMOTOR UND DIESES VERFAHREN VERWENDENDER MOTOR
METHOD AND DEVICE FOR CONTROLLING THE TEMPERATURE OF AN AIR MASS INTO AN INTERNAL COMBUSTION ENGINE AND ENGINE USING SAID METHOD

(30) Priorité: 15.11.2000 FR 0014713
(43) Date de publication de la demande: 13.08.2003
(73) Titulaire: JOHNSON CONTROLS AUTOMOTIVE ELECTRONICS, 95520 Osny (FR)
(72) Inventeur: NICOLE, Eric, F-93800 Epinay sur Eine (FR); DOREAU, Jean, F-95450 Vigny (FR)
(74) Mandataire: Fruchard, Guy
(86) Numéro de dépôt international: PCT/FR2001/003492
(87) Numéro de publication internationale: WO 2002/040853

(56) Documents cités:
- EP-A- 1 020 623
- EP-A- 1 136 675
- WO-A-99/42718
- DE-A- 3 835 333
- US-A- 4 300 486
- US-A- 5 367 990
- PATENT ABSTRACTS OF JAPAN vol. 009, no. 268 (M-424), 25 octobre 1985 (1985-10-25) -& JP 60 113058 A (YANMAR DIESEL ENGINE CO LTD), 19 juin 1985 (1985-06-19)

## Description

La présente invention concerne la commande des moteurs à combustion interne à soupapes actionnées individuellement, et elle concerne plus spécifiquement la régulation de la température de la masse d'air admise, au cours d'un cycle, dans un cylindre d'un moteur à combustion interne ayant au moins trois soupapes par cylindre qui sont commandées individuellement, parmi lesquelles au moins deux soupapes d'admission.

De façon classique, la régulation de température (réchauffement ou refroidissement) de la charge d'air admise dans un cylindre est obtenue à l'aide d'un échangeur de chaleur muni
- soit de moyens de pilotage du fluide d'échange thermique,
- soit d'un by-pass propre à doser la portion de la charge d'air passant par l'échangeur thermique par rapport à la portion de la charge d'air qui n'y passe pas.

L'inconvénient de cette solution connue (voir par exemple WO 99/42718) réside dans la présence du by-pass et de son actionneur et dans le coût de ces organes.

L'invention a essentiellement pour but de proposer une solution technique évitant le recours au by-pass et à son actionneur, solution technique originale qui est structurellement plus simple et moins coûteuse que la solution actuellement exploitée.

A cette fin, l'invention propose, selon un premier de ses aspects, un procédé de régulation de température de la masse d'air admise, au cours d'un cycle, dans un cylindre d'un moteur à combustion interne ayant au moins trois soupapes par cylindre qui sont commandées individuellement, parmi lesquelles au moins deux soupapes d'admission, lequel procédé, étant conforme à l'invention, se caractérise en ce que
- on adjoint un échangeur de chaleur au conduit d'admission de l'une des deux soupapes d'admission,
- et on commande la proportion d'air admise par chaque soupape de manière à obtenir une masse totale d'air
souhaitée ayant une température souhaitée.

La température de la masse d'air finalement enfermée dans le cylindre est obtenue en dosant la portion de masse d'air admise par chacune des soupapes d'admission. La différenciation de l'instant et/ou de l'amplitude d'ouverture des soupapes d'admission, tout en maintenant un passage global propre à assurer l'objectif de charge d'air, permet d'ajuster la température de l'air admis à toute valeur souhaitée. Grâce à la mise en oeuvre de ce procédé, il n'est plus besoin de prévoir un by-pass et son actionneur.

On peut certes prévoir de piloter les soupapes d'admission en boucle ouverte pour l'obtention de la température souhaitée de la masse d'air admise.

Toutefois, si l'on recherche une régulation relativement fine de la température de la masse d'air admise, il est souhaitable de prévoir un rebouclage à partir d'un capteur d'un paramètre de fonctionnement du moteur. A cet effet, on pourra prévoir de mesurer la pression de la masse gazeuse enfermée dans le cylindre et, connaissant la composition de la charge admise, on analyse la variation de la pression pendant la phase de compression et on en déduit une évaluation de la masse de la charge enfermée et la température moyenne de cette masse au moment de la fermeture de l'admission. Ou bien aussi on pourra prévoir de mesurer la température des gaz d'échappement.

De façon très intéressante, le procédé conforme à l'invention offre la possibilité de commander de façon individualisée les soupapes de chaque cylindre du moteur de manière à prendre en compte les dispersions aérodynamiques et de composants entre les cylindres.

De façon particulièrement intéressante et préférée, le procédé de l'invention peut être utilisé pour le contrôle de la combustion d'un moteur à auto-allumage.

Le procédé de l'invention peut recevoir d'autres applications, par exemple pour diminuer le temps de mise en action ("light off") d'un catalyseur.

Selon un de ses aspects, l'invention propose un moteur à combustion interne comportant au moins trois soupapes par cylindre qui sont commandées individuellement, parmi lesquelles au moins deux soupapes d'admission, lequel moteur, étant agencé conformément à l'invention, se caractérise en ce qu'il comporte :
- un échangeur de chaleur disposé sur un conduit d'admission d'une des soupapes d'admission,
   et
- des moyens pour commander individuellement l'ouverture et la fermeture de chacune des deux soupapes d'admission,

ce grâce à quoi il est possible, en réglant la proportion de la masse d'air admise individuellement par les deux soupapes d'admission, d'ajuster à des valeurs souhaitées respectivement la masse totale d'air admise et la température de cette masse totale d'air admise.

Avantageusement, le moteur peut être équipé d'un ou plusieurs capteurs propres à mesurer les conditions de fonctionnement du moteur afin d'établir un ou plusieurs rebouclages permettant un ajustement sensiblement plus fin et plus fiable de la température à une valeur souhaitée. En particulier, le moteur peut comporter un capteur de la pression de la charge enfermée dans le cylindre propre à détecter la variation de la pression pendant la phase de compression et des moyens de traitement de signaux recevant le signal délivré par ledit capteur et propres à déterminer une évaluation de la masse de la charge enfermée et la température moyenne de cette masse au moment de la fermeture de l'admission.

Le moteur peut aussi comporter un capteur de température des gaz d'échappement.

Pour limiter l'influence du contrôle de température sur le tourbillonnement ("swirl") dans le cylindre, les conduits d'admission peuvent être disposés sensiblement radialement par rapport au cylindre, c'est-à-dire que les conduits d'admission sont orientés sensiblement radialement afin que le déséquilibre dû à l'ouverture de la soupape ne provoque pas de mouvement de rotation de la charge d'air dans le cylindre.

De façon intéressante, les moyens de commande des soupapes peuvent être propres à assurer une commande individualisée des soupapes de chaque cylindre du moteur prenant en compte les dispersions aérodynamiques et de composants entre les cylindres.

Les dispositions conformes à l'invention sont particulièrement intéressantes (bien qu'il ne s'agisse pas là d'une application exclusive) lorsque le moteur est du type à auto-allumage.

De façon très intéressante également, en particulier lorsqu'il s'agit d'un moteur à auto-allumage, l'échangeur de chaleur fonctionnant en tant que réchauffeur est structurellement intégré au moins partiellement dans la culasse du moteur, ce grâce à quoi cet échangeur participe au refroidissement de la culasse.

L'invention sera mieux comprise à la lecture de la description détaillée qui suit d'un mode de réalisation préféré donné uniquement à titre d'exemple nullement limitatif. Dans cette description on se réfère au dessin annexé sur lequel :
- la figure 1 est une vue de dessus très schématique d'une partie de moteur à soupape d'admission à commandes individuelles, qui est agencé conformément à l'invention ; et
- la figure 2 est une vue très schématique de côté du moteur de la figure 1 coupé à travers un cylindre.

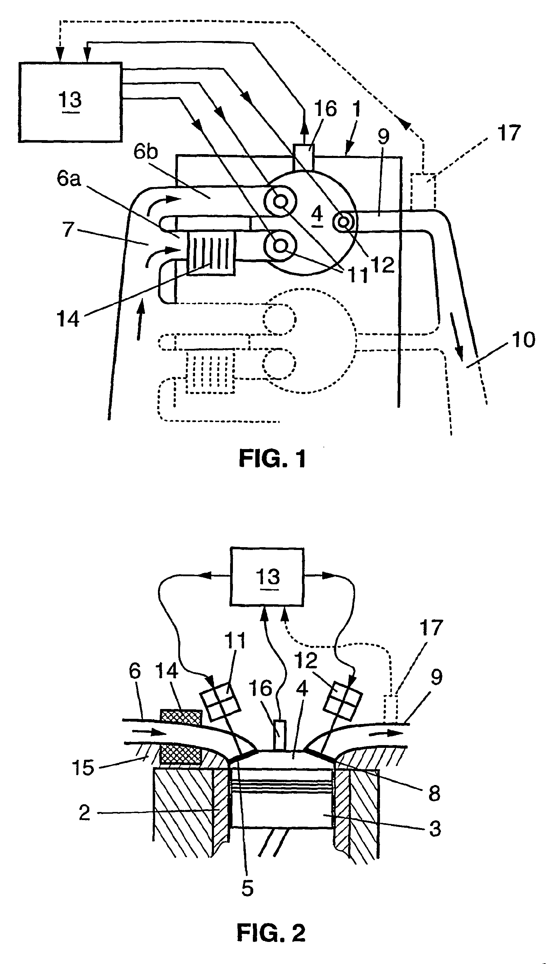

En se reportant maintenant aux figures 1 et 2, un moteur 1 à combustion interne comporte au moins un cylindre délimité par une chemise 2 dans lequel est abrité un piston 3 qui définit, avec les parois du cylindre, une chambre 4.

Chaque cylindre est équipé d'au moins trois soupapes, à savoir au moins deux soupapes d'admission 5, commandant les orifices respectifs de deux conduits d'admission 6 dérivés d'un collecteur d'admission 7, et au moins une soupape d'échappement 8, commandant un orifice d'un conduit d'échappement 9 dérivé d'un collecteur d'échappement 10 (en pratique, chaque cylindre pourra être pourvu de deux soupapes d'admission et de deux soupapes d'échappement).

Au moins les deux soupapes d'admission 5, et de préférence toutes les soupapes (admission et échappement) sont du type à actionnement individuel, notamment à l'aide d'actionneurs individuels électromagnétiques respectivement 11 pour les soupapes d'admission 6 et 12 pour les soupapes d'échappement 8.

Les actionneurs individuels 11, et éventuellement 12 lorsqu'ils existent, sont placés sous la commande d'une unité de commande 13 qui délivre les signaux d'excitation appropriés en fonction d'instructions internes et/ou de relevés de divers paramètres de fonctionnement du moteur dont les exemples seront indiqués plus loin.

Conformément à l'invention, pour chaque cylindre, un échangeur de chaleur 14 est disposé sur un conduit d'admission 6a d'une des soupapes d'admission, tandis que l'autre conduit d'admission 6b de l'autre soupape d'admission reste de type habituel (c'est-à-dire non équipé d'un échangeur).

Dans ce cas, il devient possible, en réglant la portion de la masse d'air admise individuellement par les deux soupapes d'admission (en agissant sur la commande individuelle des deux soupapes d'admission pour en ajuster le moment d'ouverture et/ou le moment de fermeture (autrement dit la durée d'ouverture), et/ou pour ajuster l'amplitude du soulèvement de chaque soupape d'admission), d'ajuster à des valeurs souhaitées respectivement la masse totale d'air admise ainsi que la température de cette masse d'air admise. Cet agencement perfectionné conformément à l'invention permet de s'affranchir du by-pass classique et de son actionneur.

En outre, la mise en oeuvre de soupapes à actionnement individuel permet, en adaptant en conséquence les moyens de commande, de prendre en compte les dispersions aérodynamiques et de composants entre les cylindres, et par conséquent d'obtenir un fonctionnement beaucoup plus homogène des cylindres, et au bout du compte un fonctionnement plus régulier du moteur.

De façon très avantageuse, comme cela est plus particulièrement visible à la figure 2, l'échangeur 14 peut être intégré au moins partiellement à la culasse 15 du moteur dans le cas où ledit échangeur fonctionne en tant que réchauffeur : l'échangeur 14 participe ainsi au refroidissement de la culasse 15, et plus généralement au refroidissement du bloc moteur, solution qui est particulièrement intéressante dans le cadre de l'application des dispositions de l'invention au moteur du type à auto-allumage pour lequel les problèmes de régulation de température sont d'une très grande importance.

Le pilotage des soupapes à actionnement individuel peut être effectué en boucle ouverte, ce qui peut se révéler suffisant pour l'obtention d'une régulation de bonne qualité de la température de la masse d'air admise.

Toutefois, si une régulation fine de la température de l'air s'avère nécessaire, il convient alors d'avoir recours à une configuration de réglage avec bouclages.

On peut en particulier envisager la mise en oeuvre d'un capteur 16 de la pression de la charge enfermée dans la chambre 4 (le capteur 16 étant montré, à la figure 1, dans une position anormale afin de permettre d'illustrer sa liaison avec l'unité de commande 13) et qui est propre à détecter la variation de la pression pendant la phase de compression. Le capteur de pression 16 est relié à l'unité de commande 13 qui traite le signal de sortie dudit capteur et détermine une évaluation de la masse de la charge enfermée et la température moyenne de cette masse au moment de la fermeture de l'admission.

On peut également envisager la mise en oeuvre d'un capteur 17 de température des gaz d'échappement monté sur le ou un conduit d'échappement 9 du cylindre. Le capteur 17 est lui aussi raccordé à l'unité de commande 13 qui traite son signal de sortie.

Pour limiter l'influence du contrôle de température sur le tourbillonnement ("swirl") dans le cylindre, les conduits d'admission 6a, 6b peuvent s'étendre radialement par rapport au cylindre, de manière qu'un déséquilibre d'ouverture des soupapes n'entraîne pas un mouvement de rotation de la charge admise dans le cylindre.

On notera que le contrôle de température de la charge d'air admise dans le cylindre par pilotage différentiel des deux soupapes d'admission dont l'une équipe un conduit d'admission associé à un échangeur de chaleur - solution qui, comme souligné plus haut, trouve une application préférée bien que non exclusive dans les moteurs à auto-allumage - peut également être utilisé pour diminuer le temps de mise en action ("light-off") d'un catalyseur d'un pot catalytique.

En outre, on notera également que la solution de l'invention n'exclut pas la mise en oeuvre d'une recirculation des gaz, par exemple une recirculation interne des gaz (IGR) ou une recirculation des gaz d'échappement (EGR).

## Revendications

1. Procédé de régulation de la température de la masse d'air admise, au cours d'un cycle, dans un cylindre d'un moteur à combustion interne ayant au moins trois soupapes (5, 8) par cylindre qui sont commandées (11, 12) individuellement, parmi lesquelles au moins deux soupapes d'admission, procédé selon lequel
- on adjoint un échangeur de chaleur (14) au conduit d'admission (6a) de l'une des deux soupapes d'admission,
- et on commande (11, 13) la proportion d'air admise par chaque soupape de manière à obtenir une masse totale d'air souhaitée ayant une température souhaitée,
**caractérisé en ce qu'**on mesure (16) la pression de la masse gazeuse enfermée dans le cylindre et **en ce que**, connaissant la composition de la charge admise, on analyse la variation de la pression pendant la phase de compression et on en déduit une évaluation de la masse de la charge enfermée et la température moyenne de cette masse au moment de la fermeture de l'admission.

2. Procédé de régulation selon la revendication 1 **caractérisé en ce qu'**on mesure (17) la température des gaz d'échappement.

3. Procédé de régulation de température selon la revendication 1 ou 2, **caractérisé en ce qu'**on commande de façon individualisée les soupapes de chaque cylindre du moteur de manière à prendre en compte les dispersions aérodynamiques et de composants entre les cylindres.

4. Procédé de régulation de température selon l'une quelconque des revendications 1 à 3, **caractérisé en ce qu'**il est utilisé pour le contrôle de la combustion d'un moteur à auto-allumage.

5. Procédé de régulation de température selon l'une quelconque des revendications 1 à 3, **caractérisé en ce qu'**il est utilisé pour diminuer le temps de mise en action ("light off") d'un catalyseur.

6. Moteur à combustion interne comportant au moins trois soupapes (5, 8) par cylindre qui sont commandées individuellement, parmi lesquelles au moins deux soupapes d'admission,
comportant :
- un échangeur de chaleur (14) disposé sur un conduit d'admission (6a) d'une des soupapes d'admission (5),
et
- des moyens (11, 13) pour commander individuellement l'ouverture et la fermeture de chacune des deux soupapes d'admission,
de manière qu'il est possible, en réglant la proportion de la masse d'air admise individuellement par les deux soupapes d'admission, d'ajuster à des valeurs souhaitées respectivement la masse totale d'air admise et la température de cette masse totale d'air admise,
**caractérisé en ce qu'**il comporte un capteur de la pression de la charge enfermée dans le cylindre (16) propre à détecter la variation de la pression pendant la phase de compression
et des moyens de traitement de signaux (13) recevant le signal délivré par ledit capteur (16) et propres à déterminer une évaluation de la masse de la charge enfermée et la température moyenne de cette masse au moment de la fermeture de l'admission.

7. Moteur à combustion interne selon la revendication 6, **caractérisé en ce qu'**il comporte un capteur (17) de température des gaz d'échappement.

8. Moteur à combustion interne selon la revendication 6 ou 7, **caractérisé en ce que** les conduits d'admission (6a, 6b) sont disposés sensiblement radialement par rapport au cylindre (2).

9. Moteur à combustion interne selon l'une quelconque des revendications 6 à 8, **caractérisé en ce que** les moyens (11, 12 ; 13) de commande des soupapes sont propres à assurer une commande individualisée des soupapes (5, 8) de chaque cylindre du moteur prenant en compte les dispersions aérodynamiques et de composants entre les cylindres.

10. Moteur à combustion interne selon l'une quelconque des revendications 6 à 9, **caractérisé en ce que** le moteur est du type à auto-allumage.

11. Moteur à combustion interne selon l'une quelconque des revendications 6 à 10, **caractérisé en ce que** l'échangeur de chaleur (14) fonctionnant en tant que réchauffeur est structurellement intégré au moins partiellement dans la culasse (15) du moteur, ce grâce à quoi cet échangeur participe au refroidissement de la culasse.

## Patentansprüche

1. Verfahren zur Regelung der Temperatur der Luftmasse, die während eines Zyklus in einen Zylinder eines Verbrennungsmotors eingelassen wird, der pro Zylinder mindestens drei Ventile (5, 8) hat, die einzeln gesteuert (11, 12) werden und von denen mindestens zwei Einlassventile sind, wobei gemäß dem Verfahren
- der Einlassleitung (6a) eines der beiden Einlassventile ein Wärmetauscher (14) zugefügt wird,
- und der Anteil an eingelassener Luft pro Ventil derart gesteuert wird, dass eine gewünschte Gesamtluftmasse erhalten wird, die eine gewünschte Temperatur hat,
**dadurch gekennzeichnet, dass** der Druck der in dem Zylinder eingeschlossenen Gasmasse gemessen (16) wird und dass, da die Zusammensetzung der eingelassenen Ladung bekannt ist, die Veränderung des Druckes während der Verdichtungsphase analysiert und daraus eine Berechnung der Masse der eingeschlossenen Ladung und der mittleren Temperatur dieser Masse zum Zeitpunkt des Schließens des Einlasses abgeleitet wird.

2. Regelverfahren nach Anspruch 1, **dadurch gekennzeichnet, dass** die Temperatur der Abgase gemessen (17) wird.

3. Verfahren zur Regelung der Temperatur nach Anspruch 1 oder 2, **dadurch gekennzeichnet, dass** die Ventile jedes Zylinders des Motors derart einzeln gesteuert werden, dass die aerodynamischen Dispersionen und die von Komponenten zwischen den Zylindern berücksichtigt werden.

4. Verfahren zur Regelung der Temperatur nach einem der Ansprüche 1 bis 3, **dadurch gekennzeichnet, dass** es zur Kontrolle der Verbrennung eines Motors mit Selbstzündung eingesetzt wird.

5. Verfahren zur Regelung der Temperatur nach einem der Ansprüche 1 bis 3, **dadurch gekennzeichnet, dass** es zum Verkürzen der Anspringzeit ("light off') eines Katalysators eingesetzt wird.

6. Verbrennungsmotor mit mindestens drei Ventilen (5, 8) pro Zylinder, die einzeln gesteuert werden und von denen mindestens zwei Einlassventile sind, umfassend:
- einen Wärmetauscher (14), der an einer Einlassleitung (6a) eines der Einlassventile (5) angeordnet ist, und
- Mittel (11, 13) zum individuellen Steuern des Öffnens und des Schließens jedes der beiden Einlassventile,
derart, dass es durch Regeln des Anteils der Luftmasse, die einzeln über die beiden Einlassventile eingelassen wird, möglich ist, die eingelassene Gesamtluftmasse und die Temperatur dieser eingelassenen Gesamtluftmasse auf jeweils gewünschte Werte einzustellen,
**dadurch gekennzeichnet, dass** er einen Sensor zum Erfassen des Druckes der in dem Zylinder (16) eingeschlossenen Ladung hat, der dazu geeignet ist, die Veränderung des Druckes während der Verdichtungsphase zu erfassen, sowie
Signalverarbeitungsmittel (13), die das von dem Sensor (16) ausgegebene Signal empfangen und dazu geeignet sind, eine Berechnung der Masse der eingeschlossenen Ladung und der mittleren Temperatur dieser Masse zum Zeitpunkt des Schließens des Einlasses zu bestimmen.

7. Verbrennungsmotor nach Anspruch 6, **dadurch gekennzeichnet, dass** er einen Sensor (17) zum Erfassen der Temperatur der Abgase umfasst.

8. Verbrennungsmotor nach Anspruch 6 oder 7, **dadurch gekennzeichnet, dass** die Einlassleitungen (6a, 6b) im wesentlichen radial zum Zylinder (2) angeordnet sind.

9. Verbrennungsmotor nach einem der Ansprüche 6 bis 8, **dadurch gekennzeichnet, dass** die Mittel (11, 12; 13) zum Steuern der Ventile dazu geeignet sind, eine individuelle Steuerung der Ventile (5, 8) jedes Zylinders des Motors sicherzustellen, die die aerodynamischen Dispersionen und die von Komponenten zwischen den Zylindern berücksichtigt.

10. Verbrennungsmotor nach einem der Ansprüche 6 bis 9, **dadurch gekennzeichnet, dass** der Motor vom Typ mit Selbstzündung ist.

11. Verbrennungsmotor nach einem der Ansprüche 6 bis 10, **dadurch gekennzeichnet, dass** der Wärmetauscher (14), der als Erhitzer dient, strukturell wenigstens zum Teil in den Zylinderkopf (15) des Motors integriert ist, wodurch dieser Tauscher zur Kühlung des Zylinderkopfes beiträgt.

## Claims

1. A method of regulating the temperature of the mass of air admitted during one cycle into a cylinder of an internal combustion engine having at least three valves (5, 8) per cylinder under individual control (11, 12), including at least two admission valves, in which method:
· a heat exchanger (14) is associated with the admission duct (6a) of one of the two admission valves; and
· the proportion of air admitted by each valve is controlled (11, 13) in such a manner as to obtain a desired total mass of air at a desired temperature;
the method being **characterized in that** the pressure of the mass of gas enclosed in the cylinder is measured (16), and **in that**, knowing the composition of the admitted charge, variation in the pressure during the compression stage is analyzed and an evaluation is deduced therefrom of the mass of the enclosed charge and of the mean temperature of said mass at the moment that admission is closed.

2. A method of regulation according to claim 1, **characterized in that** the temperature of the exhaust gas is measured (17).

3. A temperature regulation method according to claim 1 or claim 2, **characterized in that** the valves of each cylinder of the engine are controlled individually in such a manner as to take account of aerodynamic dispersions and component dispersions between the cylinders.

4. A temperature regulation method according to any one of claims 1 to 3, **characterized in that** it is used for controlling the combustion of an auto-ignition engine.

5. A temperature regulation method according to any one of claims 1 to 3, **characterized in that** it is used for reducing the time required for a catalyst to come into action (to "light off").

6. An internal combustion engine comprising at least three valves (5, 8) per cylinder that are controlled individually, including at least two admission valves, the engine including:
· a heat exchanger (14) disposed on an admission duct (6a) to one of the admission valves (5); and
· means (11, 13) for individually controlling the opening and the closing of each of the two admission valves;
in such a manner that by adjusting the proportion of the mass of air admitted individually by each of the two admission valves, it is possible to adjust the total mass of air admitted and the temperature of said total mass of air admitted to respective desired values,
the engine being **characterized in that** it includes a sensor for sensing the pressure of the charge enclosed in the cylinder (16) and suitable for detecting variation in pressure during the compression stage; and
signal processor means (13) receiving the signal delivered by said sensor (16) and suitable for evaluating the mass of the enclosed charge and the mean temperature of said mass at the time admission is closed.

7. An internal combustion engine according to claim 6, **characterized in that** it includes a sensor (17) for sensing the temperature of the exhaust gas.

8. An internal combustion engine according to claim 6 or claim 7, **characterized in that** the admission ducts (6a, 6b) are disposed substantially radially relative to the cylinder (2).

9. An internal combustion engine according to any one of claims 6 to 8, **characterized in that** the valve control means (11, 12; 13) are suitable for providing individualized control to the valves (5, 8) of each cylinder of the engine that takes account of aerodynamic dispersions and component dispersions between the cylinders.

10. An internal combustion engine according to any one of claims 6 to 9, **characterized in that** the engine is of the auto-ignition type.

11. An internal combustion engine according to any one of claims 6 to 10, **characterized in that** the heat exchanger (14) operating as a heater is structurally integrated at least in part in the cylinder head (15) of the engine, whereby this heat exchanger contributes to cooling the cylinder head.
